# EUROPÄISCHE PATENTSCHRIFT

(11) **EP 1 274 803 B1**
(45) Veröffentlichungstag und Bekanntmachung des Hinweises auf die Patenterteilung: **16.06.2004**
(21) Anmeldenummer: 01929485.9
(22) Anmeldetag: 31.03.2001
(51) Int. Cl.: C09B 67/22, D06P 1/38, C09B 62/44

(54) **FARBSTOFFMISCHUNG VON WASSERLÖSLICHEN FASERREAKTIVEN AZOFARBSTOFFEN, VERFAHREN ZU IHRER HERSTELLUNG UND IHRE VERWENDUNG**
DYE MIXTURE OF WATER-SOLUBLE FIBER-REACTIVE AZO DYES, METHOD FOR THE PRODUCTION AND USE THEREOF
MELANGE DE COLORANTS AZOIQUES HYDROSOLUBLES REAGISSANT AVEC LA FIBRE, LEUR PROCEDE DE PRODUCTION ET LEUR UTILISATION

(30) Priorität: 08.04.2000 DE 10017555
(43) Veröffentlichungstag der Anmeldung: 15.01.2003
(73) Patentinhaber: DyStar Textilfarben GmbH & Co. Deutschland KG, 60318 Frankfurt am Main (DE)
(72) Erfinder: RUSS, Werner, Hubert, 65439 Flörsheim-Wicker (DE); STECKELBERG, Joachim, 25541 Brunsbüttel (DE)
(86) Internationale Anmeldenummer: PCT/EP2001/003700
(87) Internationale Veröffentlichungsnummer: WO 2001/077232

(56) Entgegenhaltungen:
- EP-A- 0 478 503
- EP-A- 0 681 007
- EP-A- 0 719 841
- EP-A- 0 775 732
- EP-A- 0 776 947
- EP-A- 0 957 137
- WO-A-01/62856
- DE-C- 4 140 117
- US-A- 5 200 511

## Beschreibung

Die Erfindung liegt auf dem technischen Gebiet der faserreaktiven Azofarbstoffe.

Aus EP-A 775732 und EP-A 94055 sind Farbstoffe der allgemeinen Formeln 1 und 2 bekannt. Diese besitzen jedoch gewisse anwendungstechnische Mängel, wie beispielsweise eine zu große Abhängigkeit der Farbausbeute von wechselnden Färbeparametem im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können schlechte Reproduzierbarkeiten der erhältlichen Färbungen sein.

Es ist jedoch insbesondere wichtig, Färbungen mit guter Farbausbeute zu erhalten, d.h. Färbungen, deren Farbtiefe im Verhältnis zur eingesetzten Farbstoffmenge, aufgrund der Farbeigenschaft des Farbstoffes selbst (hoher Extinktionswert) und aufgrund des färberischen Verhaltens dieses Farbstoffes, wie beispielsweise einem guten Ausziehvermögen und einem hohem Fixierwert, möglichst hoch ist. Setzt man Mischungen von Farbstoffen bestimmter Farbausbeute ein, so ist es die Regel, dass sich die Farbausbeute dieser Mischung von Farbstoffen aus der Summe der Farbausbeuten der Einzelfarbstoffe ergibt, weswegen die Farbausbeute einer Mischung von beispielsweise zwei Farbstoffen geringer sein wird als die Farbausbeute, die sich durch den Farbstoff mit der größeren Farbausbeute-Eigenschaft bei dessen Einsatz als Einzelfarbstoff, jedoch in der Gesamtmenge der beiden Einzelfarbstoffe, ergibt.

Mit der vorliegenden Erfindung wurde nunmehr gefunden, dass die Farbstärke der nachstehend beschriebenen erfindungsgemäßen Farbstoffmischungen überraschenderweise höher liegen als die Summe der Farbstärken, die die Einzelfarbstoffe der Farbstoffmischung liefern. Dieser synergistische Effekt zeigt sich zudem in einem verbesserten Aufbauverhalten der erfindungsgemäßen Mischung gegenüber einzelnen Farbstoffen, die in der Mischung enthalten sind.

Zwar sind solche synergistischen Mischungen schon aus der EP-A 681007 oder EP-A-957137 bekannt, jedoch haben die dort beschriebenen Mischungen gewisse anwendungstechnische Mängel, wie beispielsweise einen unegalen Aufbau im KKV-Verfahren, sowie eine Anschmutzung von Begleitgewebe, insbesondere Polyester, in der Continuefärberei nach dem sogenannten Pad-Steam Verfahren. Dieses unerwünschte Anschmutzen führt dazu, dass in der Praxis die gefärbte Ware mehreren intensiven Reinigungen unterworfen werden muß, um die Anschmutzungen zu entfernen, was zu einem unverhältnismäßig hohen Energie und Wasserverbrauch führt.

Mit der nun vorliegenden Erfindung ist es gelungen dieses unerwünschte Anschmutzen zu reduzieren, und zugleich ein verbessertes Aufbauverhalten der erfindungsgemäßen Mischung gegenüber einzelnen Farbstoffen, die in der Mischung enthalten sind, zu erhalten. Diese Mischungen zeichnen sich durch sehr gute Gebrauchsechtheiten aus.

Die Erfindung betrifft somit Farbstoffmischungen, enthaltend einen oder mehrere Azofarbstoffe der allgemeinen Formel (1) und einen oder mehrere Azofarbstoffe der allgemeinen Formel (2) 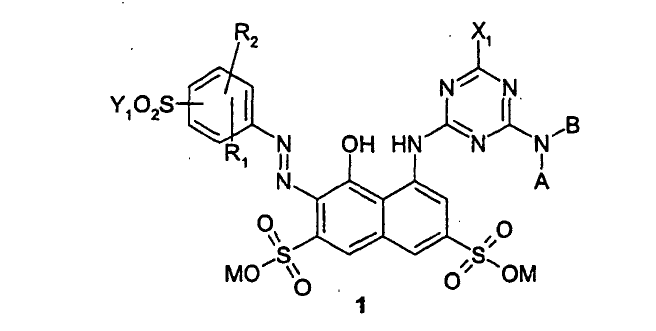 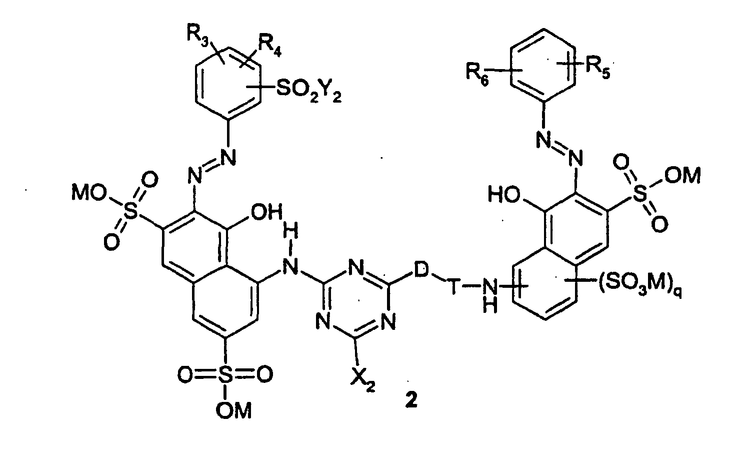 worin
- M: für ein Wasserstoffatom, ein Ammonium lon oder das Äquivalent eines Alkali- oder Erdalkalimetalls steht
- X₁: Fluoro, Chloro, Alkoxy, Hydroxy, Cyanamido, Amino, Anilino, Anilinsulfosäure, Anilindisulfosäure, Toluidin, Anisol , oder ein gegebenenfalls mit Hydroxy, Sulfo oder Sulfato substituiertes Alkylamino sein kann
- X₂: hat eine Bedeutung von X₁
- Y₁ und Y₂: für Ethenyl oder eine Gruppierung der Formel CH₂CH₂Z steht, worin
- Z: für eine Gruppierung steht, die durch Einwirkung von Alkali eliminiert werden kann
- R₁, R₂, R₃, R₄, R₅ und R₆: unabhängig voneinander für Wasserstoff, Alkyl, Alkoxy, Sulfo, Hydroxy, Cyano, Chloro, Bromo stehen

- A: für Wasserstoff steht, oder für C₁-C₆-Alkyl, welches durch Sulfo-, Hydroxy-, oder Sulfato-Gruppen substituiert sein kann, oder Anilin welches durch Sulfo oder Halogen substituiert sein kann,
- B: steht für Wasserstoff, Alkyl, CH₂CH₂SO₂Y, oder gegebenenfalls durch SO₂Y, -OCH₂CH₂SO₂Y oder -SO₃M substituiertes Alkyl, oder Phenyl welches bis zu dreifach beispielsweise durch Alkyl, Alkoxy, Sulfo, Hydroxy, Cyano, Chloro, Bromo oder SO₂Y substituiert sein kann, worin M und Y die oben genannten Bedeutungen haben
- A-N-B: steht alternativ für cyclische Amine, beispielsweise Morpholin oder Piperazin,
- D-T: eine direkte Bindung bedeuten oder aber
- T: steht für ein sym-Triazin welches in 2-Stellung mit X₃ substituiert ist, wobei X₃ eine Bedeutung von X₁ hat und
- D: steht für eine Alkylendiamino Brücke der allgemeinen Formeln 3, 4, 5 und 6: 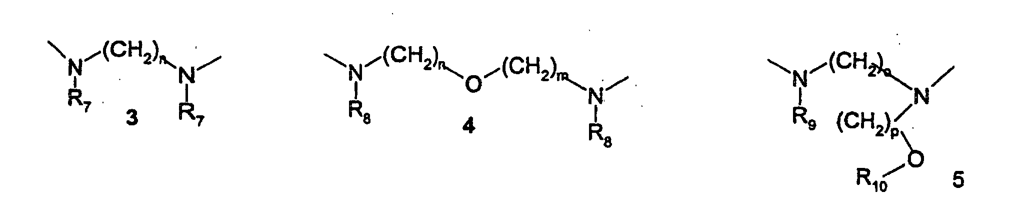 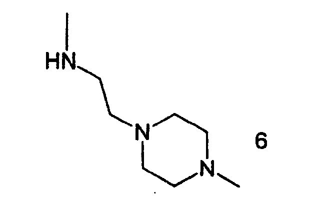
worin
- n, m, o, p: für 1-8 stehen
- q: steht für null und eins
- R₇, R₈, R₉: stehen unabhängig voneinander für C₁-C₄ Alkyl
- R₁₀: steht für Wasserstoff oder SO₃M.

Sowohl in den oben angegebenen allgemeinen Formeln als auch in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Im allgemeinen sind der Azofarbstoff der allgemeinen Formel (1) und der Azofarbstoff der allgemeinen Formel (2) in der Mischung in einem Mischungsverhältnis von 90:10 Gew.-% bis 10:90 Gew.-%, bevorzugt im Verhältnis von 70:30 Gew.-% bis 30:70 Gew.-%, enthalten. Insbesondere bevorzugt sind sie in der Mischung in einem Verhältnis von 65:35 bis 35:65 Gew.-% enthalten

X, ist bevorzugt Chloro oder Fluoro.
Für R₁, R₂, R₃ R₄, R₅, R₆, R₇, R₈ und R₉ stehendes C₁ - C₄ Alkyl kann geradkettig oder verzweigt sein, wobei Ethyl und insbesondere Methyl bevorzugt sind.
R₁ R₂, R₃ R₄, R₆ ist bevorzugt Hydroxy, Methyl, Methoxy und Sulfo und ist besonders bevorzugt Wasserstoff.
R₅ ist besonders bevorzugt Methyl, Methoxy oder Sulfo.
D ist bevorzugt 1,3- bis 1,6 Alkylendiamin, 1,5-Diamino-3-Oxy-pentan, und ist besonders bevorzugt 3-(ß-Hydroxyethyl)-Pentan-1,5-diamin. T ist bevorzugt 2-Chloro oder 2-Fluoro-1,3,5-Triazindiyl. Bevorzugt ist D-T eine direkte Bindung.

Wenn B für Phenyl steht sind bevorzugte Substituenten am Phenyl Alkyl, Alkoxy, Sulfo, Hydroxy, Cyano, Chloro, Bromo oder SO₂Y, wenn B für Alkyl steht, sind bevorzugte Substituenten -SO₂Y, OCH₂CH₂SO₂Y und -NHCH₂CH₂SO₃M, worin M und Y die oben genannten Bedeutungen haben.

Eine für Z stehende Gruppierung, die durch Einwirkung von Alkali eliminiert werden kann, ist insbesondere Sulfato der Formel -OSO₃M, Thiosulfato der Formel -SSO₃M, Acetyloxy der Formel -OCOCH₃, Phosphato der Formel OPO(OM)₂ und Chloro, wobei M wie oben angegeben definiert ist.

Die -SO₂Y Gruppe steht bevorzugt in meta- oder para-Position zur Azogruppe. Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wässriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 10 Gew.-%, bezogen auf das Farbstoffpulver enthalten. Sofern die erfindungsgemäßen Farbstoffmischungen in wässriger Lösung vorliegen, so beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen aus den obengenannten EP-As bekannten in fester oder in flüssiger Form vorliegenden Farbstoffe in den erforderlichen Anteilen oder durch Synthese mittels der üblichen Diazotierungs- und Kupplungsreaktionen und Umsetzungsreaktionen mit der Halogentriazinkomponente unter Verwendung von entsprechenden Mischungen solcher Komponenten in einer dem Fachmann geläufigen Weise und mit den hierzu erforderlichen Mengenanteilen.

So kann man beispielsweise in der Weise vorgehen, dass man, ein 2,4,6-Trihalogentriazin, insbesondere 2,4,6-Trichlor- oder 2,4,6-Trifluortriazin, zunächst in an und für sich bekannter Verfahrensweise mit 1-Amino-8-naphthol-3,6-disulfonsäure, dann mit einem Diazoniumsalz, das aus einem Amin der allgemeinen Formel (3A) oder (3B) 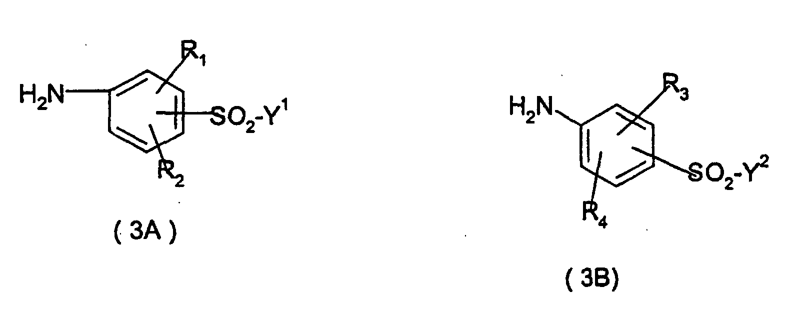 mit R₁, R₂. R₃, R₄ und Y₁ und Y₂ der obengenannten Bedeutung in wohlbekannter Weise hergestellt wurde, umsetzt, anschließend das Reaktionsprodukt aus der Umsetzung mit einem diazotierten Amin der Formel (3A) durch Reaktion mit einer oder mehreren Aminoverbindungen der allgemeinen Formel A-NH-B mit A und B in der obengenannten Bedeutung, reagieren läßt oder zur Herstellung der Komponente der allgemeinen Formel (2) in bekannter Weise bei dem Reaktionsprodukt aus der Umsetzung mit einer diazotierten Aminoverbindung der Formel (3B) das Fragment D-T einführt, dieses Reaktionsprodukt anschließend mit einem Amin der allgemeinen Formel (3C) 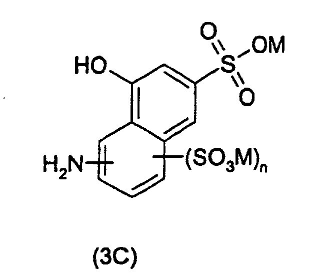 in an und für sich bekannter Verfahrensweise, umsetzt und in bekannter Weise mit dem Diazoniumsalz der Amine der allgemeinen Formel (3D) zum Bisazofarbstoff kuppelt.

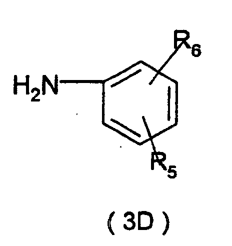

Farbstoffe der allgemeinen Formel (1) und (2), in denen X₁ und X₂ nicht Halogen sind, werden durch Umsetzung der Mischung mit den Verbindungen HOR₃ oder HNR₃R₄ in an und für sich bekannter Weise, beispielsweise bei einer Temperatur zwischen 10 und 100°C, bevorzugt zwischen 40 und 80°C, und bei einem pH-Wert zwischen 3 und 7, bevorzugt zwischen 4 und 5, umgesetzt.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen der erfindungsgemäßen Farbstoffmischungen, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasem; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.
So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wässrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln.
Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Ktotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natriumund Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Coloirists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, klare rote bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet.

### Beispiele 1-5

Herstellung der Einzelkomponenten der erfindungsgemäßen Farbstoffmischungen:
a) 19 Teile Cyanurchlorid werden in 500 Teilen Wasser und 100 Teilen Eis suspendiert. Man gibt 32 Teile 1-Amino-8-hydroxy-3,6disulfosäurenaphtalin hinzu und rührt bei 0-20 °C für ca. 2 Stunden bei pH 1,5 bis 3,5.
b) 28 Teile 4-(β-Sulfatoethylsulfonyl)-anilin Natriumsalz werden in 200 Teilen Wasser bei pH 6-7 gelöst. Man gibt 7 Teile Natriumnitrit hinzu und tropft die Lösung zu einer Mischung aus 20 Teilen konzentrierter Salzsäure 100 Teile Eis und 50 Teile Wasser. Anschließend rührt man bei 0-5 °C für 2 Stunden nach.
   Überschüssiges Nitrit wird mit Amidoschwefelsäure zersetzt.
c) Die Diazoverbindung aus b) wird zu der Reaktionsmischung aus a) zugetropft, wobei ein pH zwischen 4 und 7 mit 20%iger Sodalösung gehalten wird.
d) Anschließend gibt man 16 Teile Anilin-3-Sulfosäure bei pH 5-7 und einer Temperatur zwischen 20-60°C hinzu. Man erhält durch trocknen im Vakuum die Mischkomponente (A): 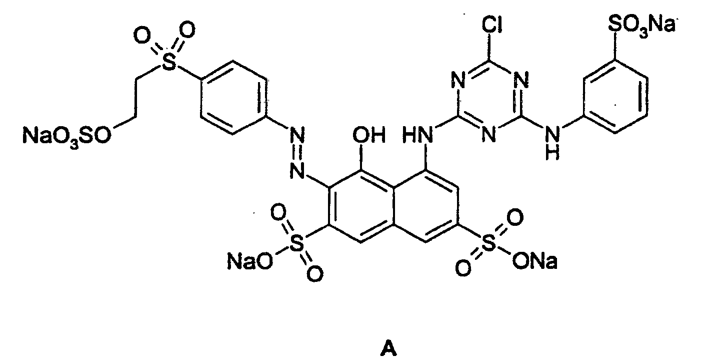
e) 20 Teile 1-Methoxy-4-Amino-3-Sulfo-Benzol werden analog b) diazotiert und mit einer Suspension von a) bei pH 4-7 und 10-20 °C gekuppelt. Hierbei wird der pH mit 10 % Sodalösung gehalten. Hierzu gibt man 30 Teile 1-Amino-8-hydroxy-3,6disulfosäurenaphtalin, wobei man auf 20-40 °C erwärmt und den pH bei 4-6 mit 10 % Sodalösung hält.
f) Zu der Reaktionsmischung aus e) wird eine Diazomischung nach b) hinzugegeben. Man erhält nach Trocknung die Mischkomponente B:

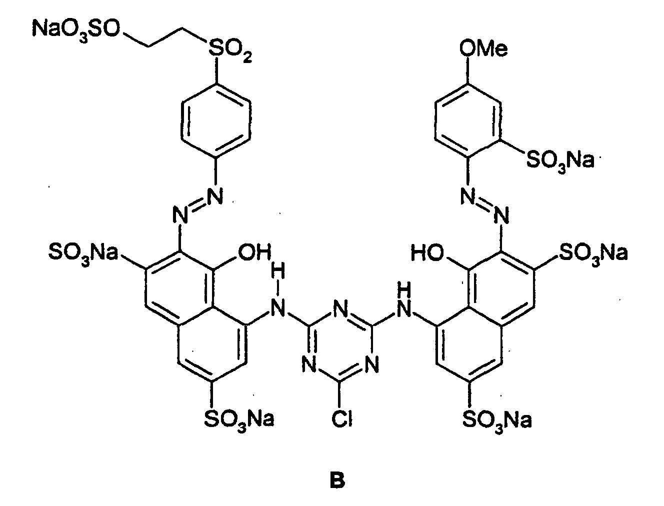

Die jeweiligen Mischkomponenten werden gemäß nachfolgender Tabelle in 2 Liter Wasser gelöst und sprühgetrocknet.

| Beispiel | Anteile A | Anteile B |
|---|---|---|
| 1 | 100 | 100 |
| 2 | 70 | 50 |
| 3 | 70 | 100 |
| 4 | 100 | 70 |
| 5 | 60 | 40 |

### Beispiele 6-10:

a) Die bei Beispielen 1-5 unter c) beschriebene Reaktionsmischung wird mit 144 Teilen 1-Methylamin-2-vinylsulfonylethan bei pH 4-6 und 20-40°C versetzt. Man erhält eine Lösung von Mischkomponente C: 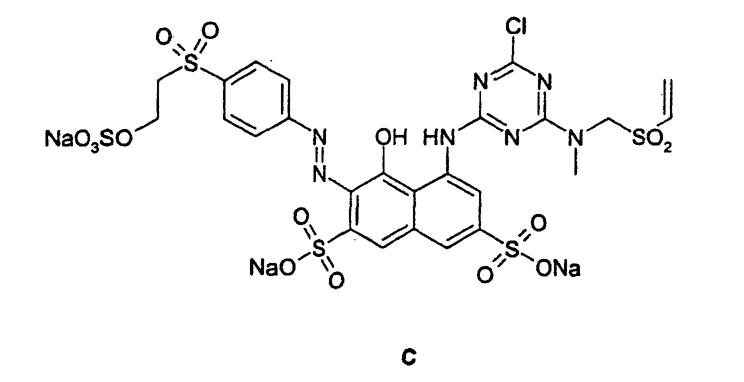
b) Eine neutrale Lösung von 22 Teilen 1-Sulfo-3-methoxy-2-Methyl-4 Anilin in 200 ml Wasser werden mit 7 Teilen Natriumnitrit versetzt und zu einer Eisgekühlten Mischung aus 50 Teilen konzentrierter Salzsäure und 100 g Eis getropft. Anschließend wird überschüssiges Nitrit wie unter Bsp 1-5 zersetzt.
c) Lösung a) wird bei pH 7 und 0 °C zu einer Lösung von 31 g 2-Amino-1,7-disulfo-5-Naphtol getropft, wobei der pH mit 15 % Sodalösung gehalten wird.
d) Separat hierzu werden 36,8 Teile Cyanurchlorid in 200 Teilen Wasser bei 0°C mit 80 Teilen 1,4-Diaminobutan versetzt, und 2 Stunden bei pH 2-3 und 0°C gerührt. Zu der Mischung gibt man 31 Teile 1-Amino-8-hydroxynaphtalin-2,7disulfosäure und nach ca. 1-3 Stunden wird die Lösung c) hinzugetropft und der pH auf 5-6 gestellt. Anschließend erwärmt man auf 20-40 °C.
e) 31 Teile 5-(β-Sulfatoethylsulfonyl)-2-methoxy-anilin Natriumsalz werden in 200 Teilen Wasser bei pH 6-7 gelöst. Man gibt 7 Teile Natriumnitrit hinzu und tropft die Lösung zu einer Mischung aus 20 g konzentrierter Salzsäure 100 g Eis und 50 g Wasser. Anschließend rührt man bei 0-5 °C für 2 Stunden nach. Überschüssiges Nitrit wird mit Amidoschwefelsäure zersetzt.
f) Das Diazolösung aus e) wird zu der Lösung aus d) bei pH 4-7 getropft, wobei der pH mit Sodalösung gehalten wird. Man erhält eine Lösung der Mischkomponente D:

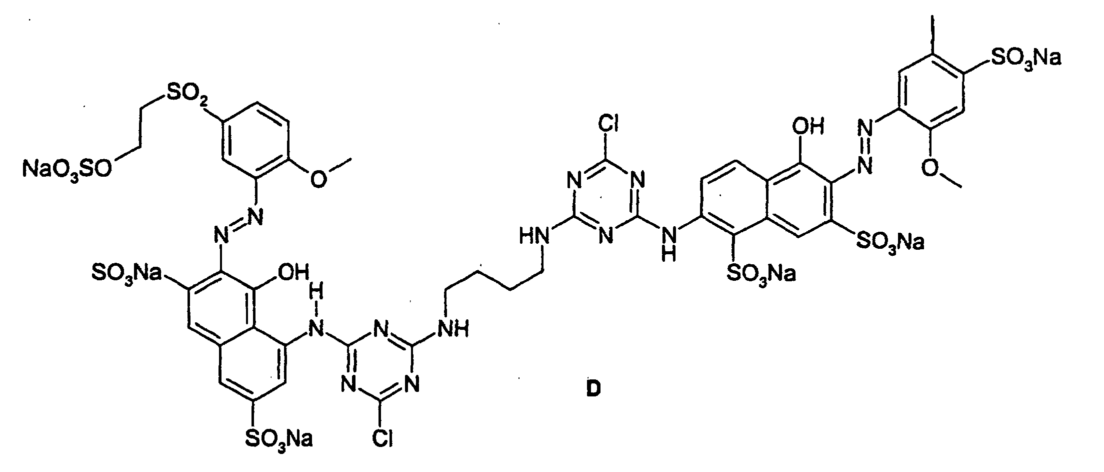

Die Komponenten C und D werden wie unter Bsp. 1 beschrieben gemischt.

| Beispiel | Mischkomponente C | Mischkomponente D |
|---|---|---|
| 6 | 100 | 100 |
| 7 | 70 | 50 |
| 8 | 70 | 100 |
| 9 | 100 | 70 |
| 10 | 60 | 40 |

### Beispiel 11:

### 100 Teile der Mischkomponente A und 100 Teile der Mischkomponente D werden in einer Pulvermühle gemischt

### Beispiel 12:

Die Mischung aus Bsp 11 wird in 500 Teilen Wasser bei pH 7 gelöst und mit 50 Teilen Morpholin versetzt, hierbei wird der pH-Wert mit Sodalösung 20 % ig gehalten. Man gibt 100 Teile Kochsalz hinzu und saugt den ausgefallenen Farbstoff ab. Man erhält eine Mischung aus: 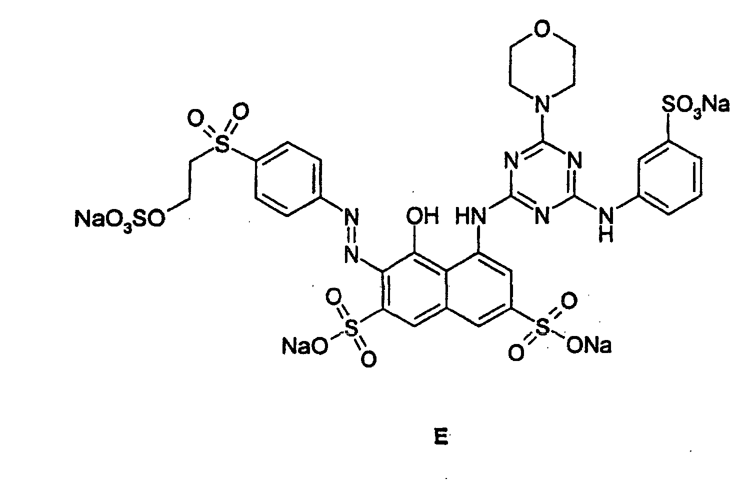 und

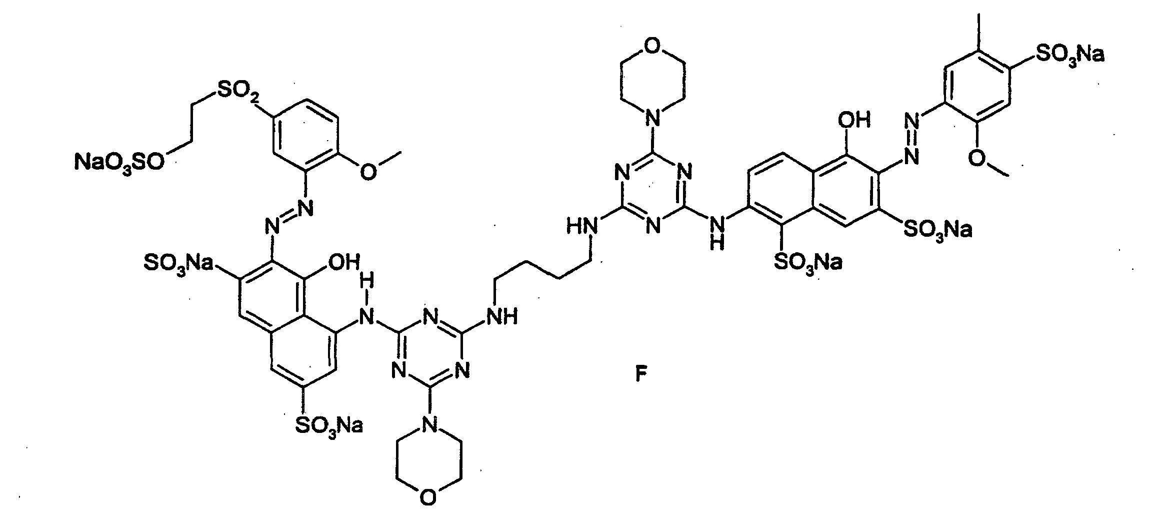

### Beispiele 13-183

In Anlehnung an die Beispiele 1-12 wurden folgende Mischkomponenten entsprechend der allg. Formel 1 synthetisiert:

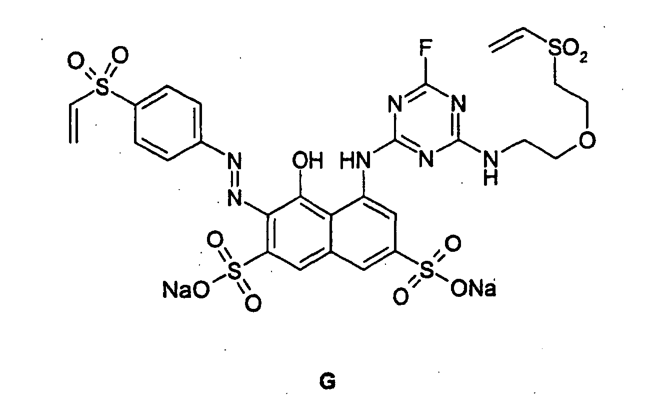

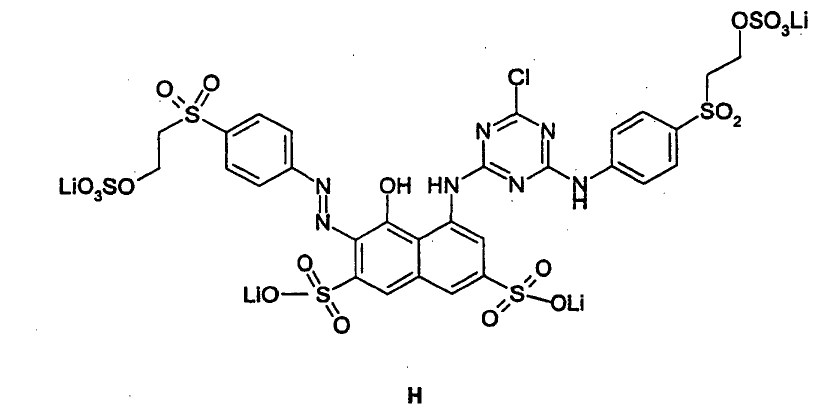

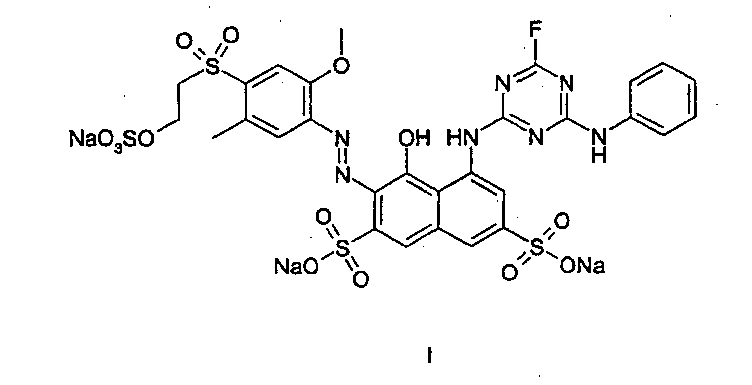

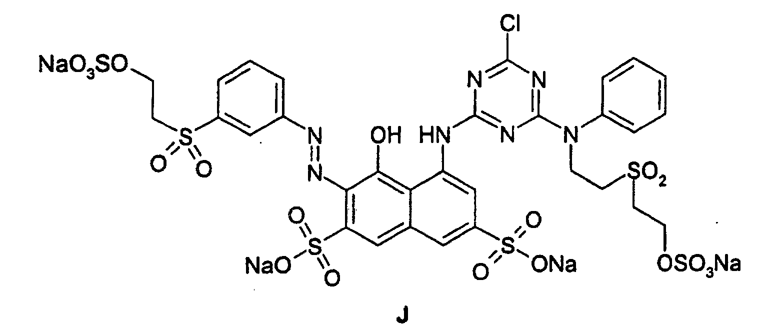

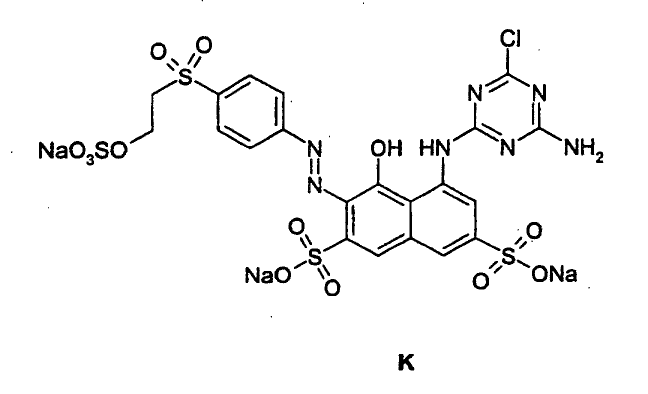

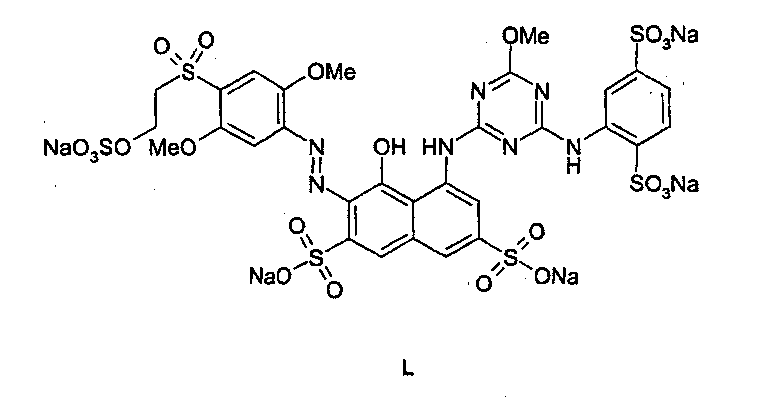

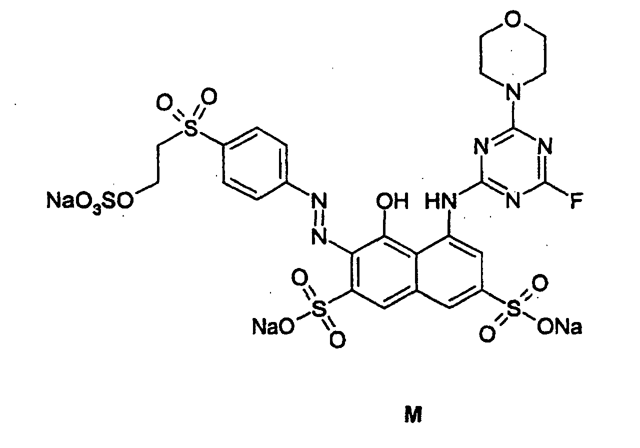

Farbstoffe der allgemeinen Formel 2 der erfindungsgemäßen Mischung sind beispielsweise:

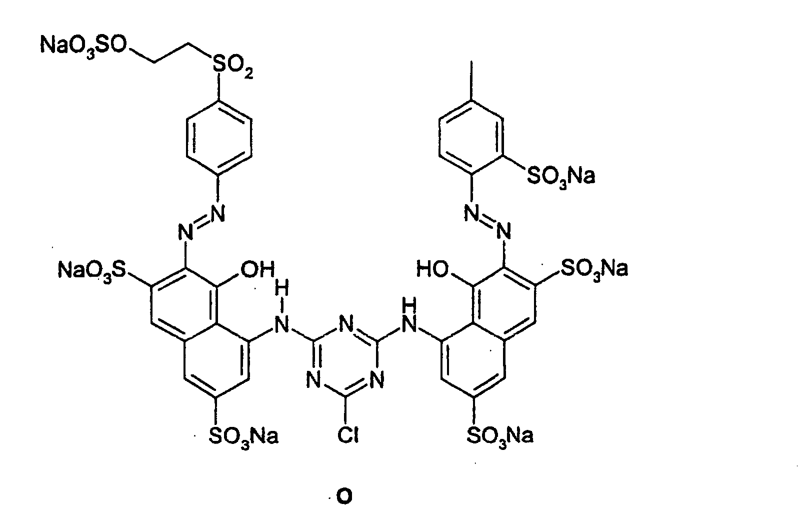

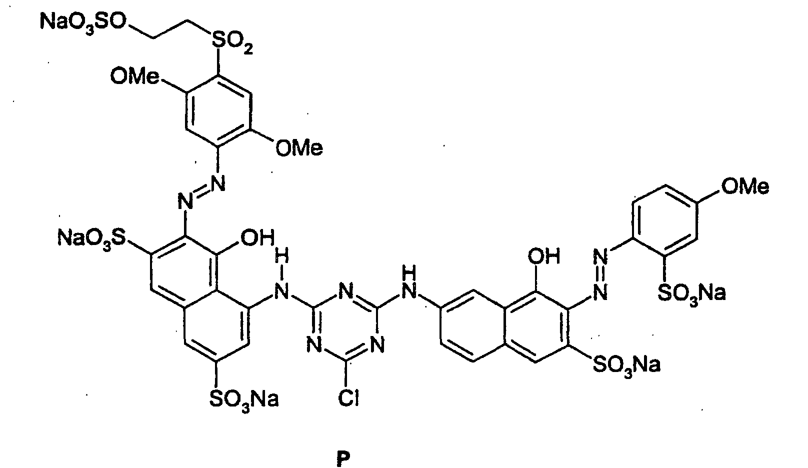

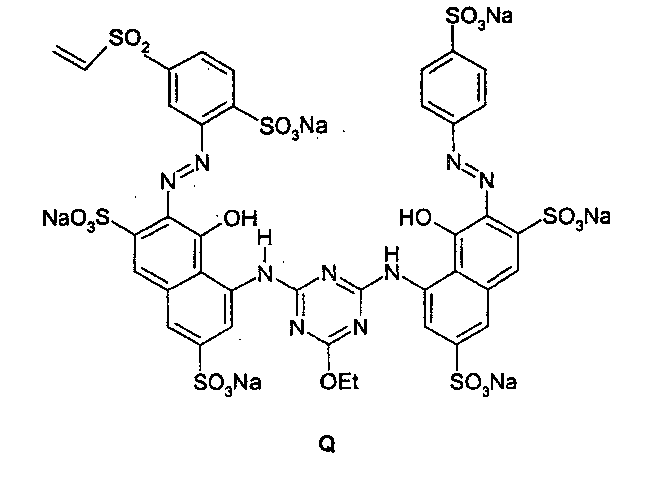

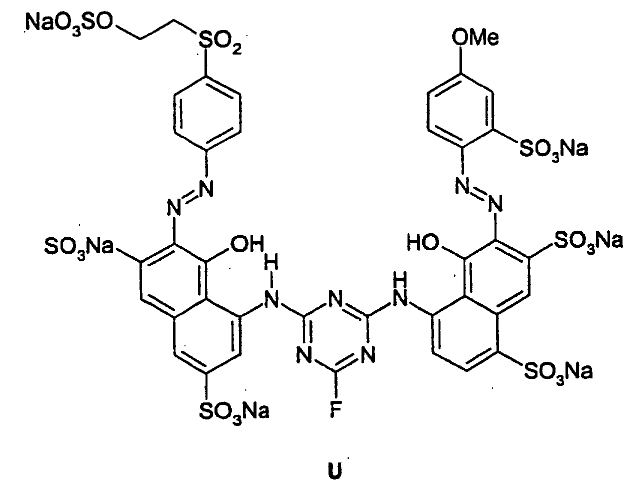

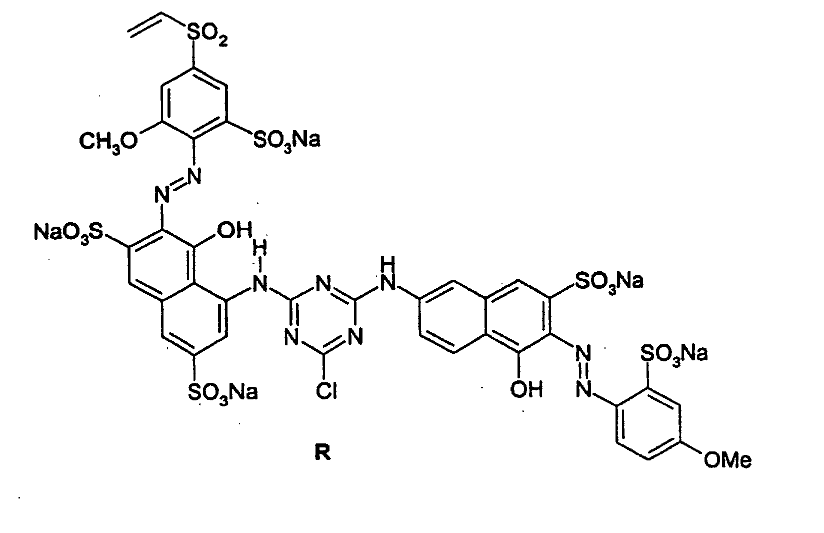

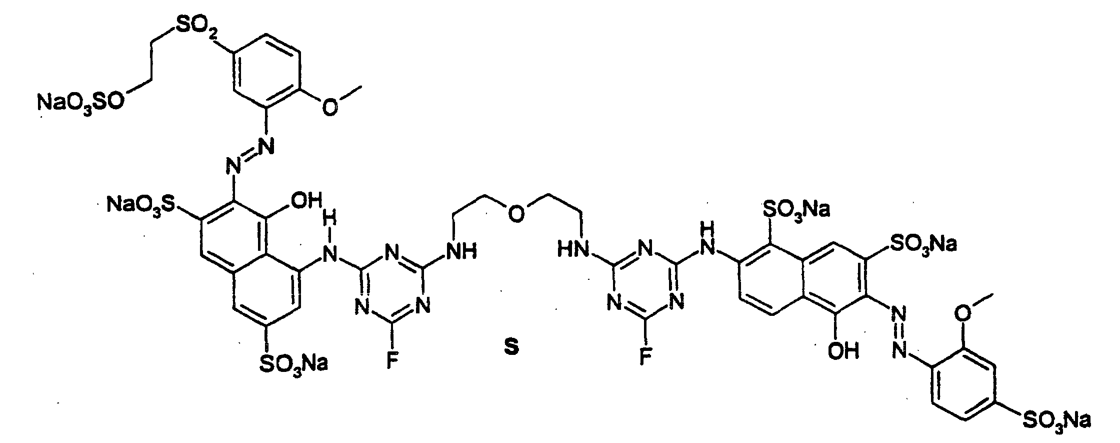

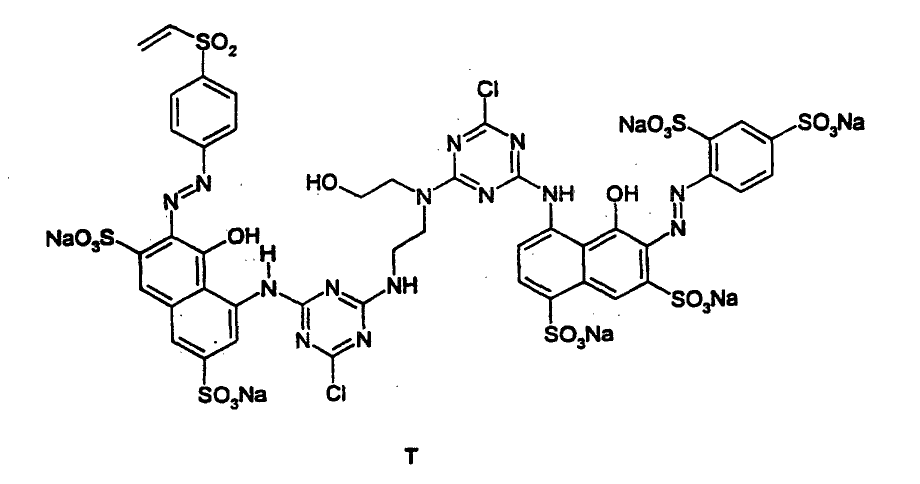

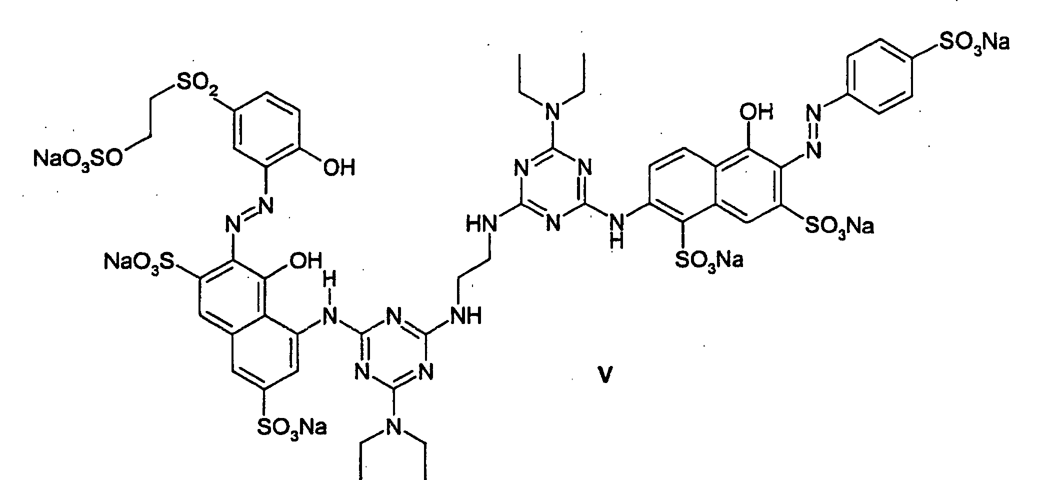

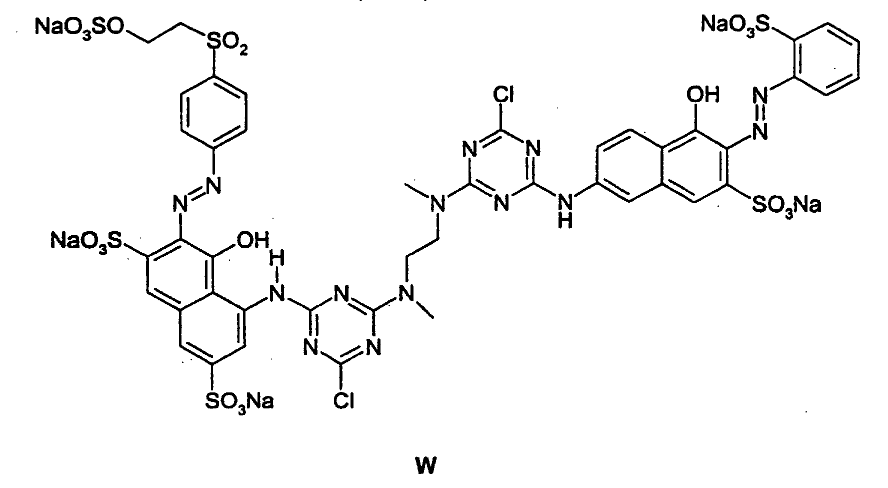

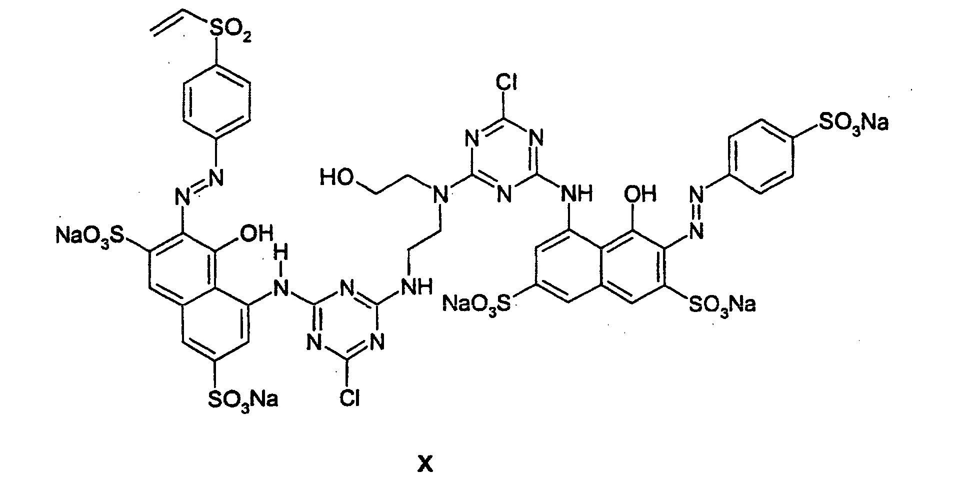

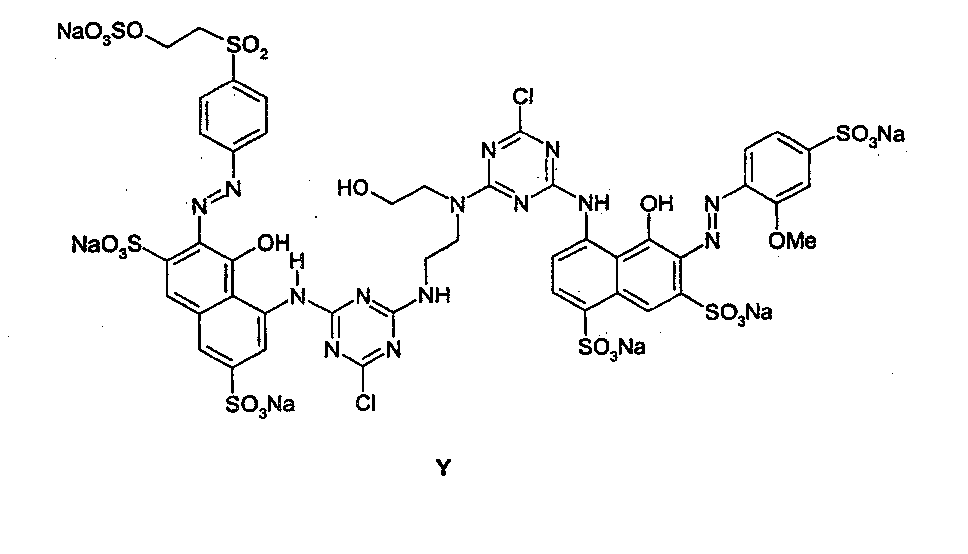

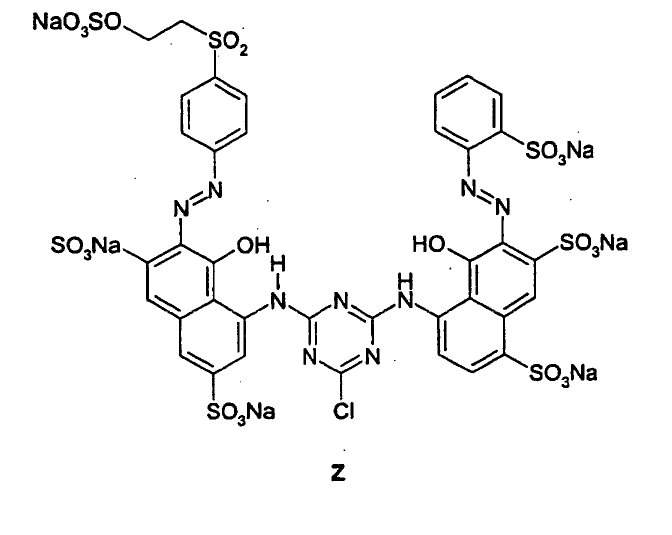

Die Komponenten **A,C,E,G-M,** die den erfindungsgemäßen Farbstoffen der allg. Formel 1 entsprechen, wurden nach untenstehender Tabelle mit den Komponenten **B,D,F,N-Z,** die den erfindungsgemäßen Farbstoffen der allg. Formel 2 entsprechen, in einem mechanischen Mixer gemischt.

| Beispiel | Komponente 1 | Komponente 2 | Verhältnis |
|---|---|---|---|
| 13 | A | N | 1:1 |
| 14 | A | N | 2 : 1 |
| 15 | A | O | 1: 2 |
| 16 | A | O | 1:1 |
| 17 | A | P | 2:1 |
| 18 | A | P | 1:2 |
| 19 | A | Q | 1:1 |
| 20 | A | Q | 1,5:2 |
| 21 | A | U | 1:1 |
| 22 | A | U | 2:1 |
| 23 | A | R | 2:3 |
| 24 | A | R | 4:3 |
| 25 | A | S | 1:1 |
| 26 | A | S | 2:1 |
| 27 | A | T | 1:1 |
| 28 | A | T | 2:1 |
| 29 | A | T | 1:2 |
| 30 | A | V | 1:1 |
| 31 | A | V | 60 : 40 |
| 32 | A | W | 1:1 |
| 33 | A | W | 1:2 |
| 34 | A | X | 1:1 |
| 35 | A | X | 2:1 |
| 36 | C | B | 1:1 |
| 37 | C | D | 1:1 |
| 38 | C | F | 1:1 |
| 39 | C | N | 1:1 |
| 40 | C | O | 1:1 |
| 41 | C | P | 1:1 |
| 42 | C | Q | 1:1 |
| 43 | C | R | 1:1 |
| 44 | C | S | 1:1 |
| 45 | C | T | 1:1 |
| 46 | C | U | 1:1 |
| 47 | C | V | 1:1 |
| 48 | C | W | 1:1 |
| 49 | C | X | 1:1 |
| 50 | E | B | 1:1 |
| 51 | E | D | 1:1 |
| 52 | E | F | 1:1 |
| 53 | E | N | 1:1 |
| 54 | E | O | 1:1 |
| 55 | E | P | 1:1 |
| 56 | E | Q | 1:1 |
| 57 | E | R | 1:1 |
| 58 | E | S | 1:1 |
| 59 | E | T | 1:1 |
| 60 | E | U | 1:1 |
| 61 | E | V | 1:1 |
| 62 | E | W | 1:1 |
| 63 | E | X | 1:1 |
| 64 | G | B | 1:1 |
| 65 | G | D | 1:1 |
| 66 | G | F | 1:1 |
| 67 | G | N | 1:1 |
| 68 | G | O | 1:1 |
| 69 | G | P | 1:1 |
| 70 | G | Q | 1:1 |
| 71 | G | R | 1:1 |
| 72 | G | S | 1:1 |
| 73 | G | T | 1:1 |
| 74 | G | U | 1:1 |
| 75 | G | V | 1:1 |
| 76 | G | W | 1:1 |
| 77 | G | X | 1:1 |
| 78 | H | B | 1:1 |
| 79 | H | D | 1:1 |
| 80 | H | F | 1:1 |
| 81 | H | N | 1:1 |
| 82 | H | O | 1:1 |
| 83 | H | P | 1:1 |
| 84 | H | Q | 1:1 |
| 85 | H | R | 1:1 |
| 86 | H | S | 1:1 |
| 87 | H | T | 1:1 |
| 88 | H | U | 1:1 |
| 89 | H | V | 1:1 |
| 90 | H | W | 1:1 |
| 91 | H | X | 1:1 |
| 92 | I | B | 1:1 |
| 93 | I | D | 1:1 |
| 94 | I | F | 1:1 |
| 95 | I | N | 1:1 |
| 96 | I | O | 1:1 |
| 97 | I | P | 1:1 |
| 98 | I | Q | 1:1 |
| 99 | I | R | 1:1 |
| 100 | I | S | 1:1 |
| 101 | I | T | 1:1 |
| 102 | I | U | 1:1 |
| 103 | I | V | 1:1 |
| 104 | I | W | 1:1 |
| 105 | I | X | 1:1 |
| 106 | J | B | 1:1 |
| 107 | J | D | 1:1 |
| 108 | J | F | 1:1 |
| 109 | J | N | 1:1 |
| 110 | J | O | 1:1 |
| 111 | J | P | 1:1 |
| 112 | J | Q | 1:1 |
| 113 | J | R | 1:1 |
| 114 | J | S | 1:1 |
| 115 | J | T | 1:1 |
| 116 | J | U | 1:1 |
| 118 | J | V | 1:1 |
| 119 | J | W | 1:1 |
| 120 | J | X | 1:1 |
| 121 | K | B | 1:1 |
| 122 | K | D | 1:1 |
| 123 | K | F | 1:1 |
| 124 | K | N | 1:1 |
| 125 | K | O | 1:1 |
| 126 | K | P | 1:1 |
| 127 | K | Q | 1:1 |
| 128 | K | R | 1:1 |
| 129 | K | S | 1:1 |
| 130 | K | T | 1:1 |
| 131 | K | U | 1:1 |
| 132 | K | V | 1:1 |
| 133 | K | W | 1:1 |
| 134 | K | X | 1:1 |
| 135 | L | B | 1:1 |
| 136 | L | D | 1:1 |
| 137 | L | F | 1:1 |
| 138 | L | N | 1:1 |
| 139 | L | O | 1:1 |
| 140 | L | P | 1:1 |
| 141 | L | Q | 1:1 |
| 142 | L | R | 1:1 |
| 143 | L | S | 1:1 |
| 144 | L | T | 1:1 |
| 145 | L | U | 1:1 |
| 146 | L | V | 1:1 |
| 147 | L | W | 1:1 |
| 148 | L | X | 1:1 |
| 149 | M | B | 1:1 |
| 150 | M | D | 1:1 |
| 151 | M | F | 1:1 |
| 152 | M | N | 1:1 |
| 153 | M | O | 1:1 |
| 154 | M | P | 1:1 |
| 155 | M | Q | 1:1 |
| 156 | M | R | 1:1 |
| 157 | M | S | 1:1 |
| 158 | M | T | 1:1 |
| 159 | M | U | 1:1 |
| 160 | M | V | 1:1 |
| 161 | M | W | 1:1 |
| 162 | M | X | 1:1 |
| 163 | A | Y | 1:1 |
| 164 | C | Y | 1:1 |
| 165 | E | Y | 1:1 |
| 166 | G | Y | 1:1 |
| 167 | H | Y | 1:1 |
| 168 | I | Y | 1:1 |
| 169 | J | Y | 1:1 |
| 170 | K | Y | 1:1 |
| 171 | L | Y | 1:1 |
| 172 | M | Y | 1:1 |
| 173 | N | Y | 1:1 |
| 174 | A | Z | 1:1 |
| 175 | C | Z | 1:1 |
| 176 | E | Z | 1:1 |
| 177 | G | Z | 1:1 |
| 178 | H | Z | 1:1 |
| 179 | I | Z | 1:1 |
| 180 | J | Z | 1:1 |
| 181 | K | Z | 1:1 |
| 182 | L | Z | 1:1 |
| 183 | M | Z | 1:1 |

## Patentansprüche

1. Farbstoffmischungen, enthaltend einen oder mehrere Azofarbstoffe der allgemeinen Formel (1) und einen oder mehrere Azofarbstoffe der allgemeinen Formel (2) 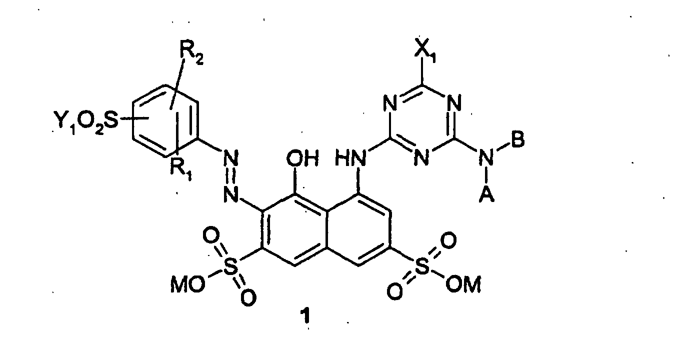 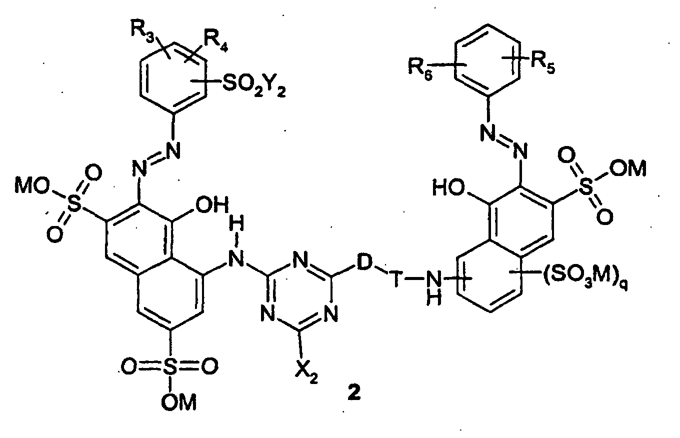 worin
M für ein Wasserstoffatom, ein Ammonium lon oder das Äquivalent eines Alkali- oder Erdalkalimetalls steht
X₁ Fluoro, Chloro, Alkoxy, Hydroxy, Cyanamido, Amino, Anilino, Anilinsulfosäure, Anilindisulfosäure, Toluidin, Anisol, oder ein gegebenenfalls mit Hydroxy, Sulfo oder Sulfato substituiertes Alkylamino sein kann
X₂ hat eine Bedeutung von X₁
Y₁ und Y₂ für Ethenyl oder eine Gruppierung der Formel CH₂CH₂Z steht, worin
Z für eine Gruppierung steht, die durch Einwirkung von Alkali eliminiert werden kann
R₁, R₂, R₃, R₄, R₅ und R₆ unabhängig voneinander für Wasserstoff, Alkyl, Alkoxy, Sulfo, Hydroxy, Cyano, Chloro, Bromo stehen
A für Wasserstoff steht, oder für C₁-C₆-Alkyl, welches durch Sulfo-, Hydroxy-, oder Sulfato-Gruppen substituiert sein kann, oder Anilin welches durch Sulfo oder Halogen substituiert sein kann,
B steht für Wasserstoff, Alkyl, CH₂CH₂SO₂Y, oder gegebenenfalls durch SO₂Y, -OCH₂CH₂SO₂Y oder -SO₃M substituiertes Alkyl, oder Phenyl welches bis zu dreifach beispielsweise durch Alkyl, Alkoxy, Sulfo, Hydroxy, Cyano, Chloro, Bromo oder SO₂Y substituiert sein kann, worin M und Y die oben genannten Bedeutungen haben
A-N-B steht alternativ für cyclische Amine, beispielsweise Morpholin oder Piperazin,
D-T eine direkte Bindung bedeuten oder aber
T steht für ein sym-Triazin welches in 2-Stellung mit X₃ substituiert ist, wobei X₃ eine Bedeutung von X, hat und
D steht für eine Alkylendiamino Brücke der allgemeinen Formeln 3, 4, 5 und 6: 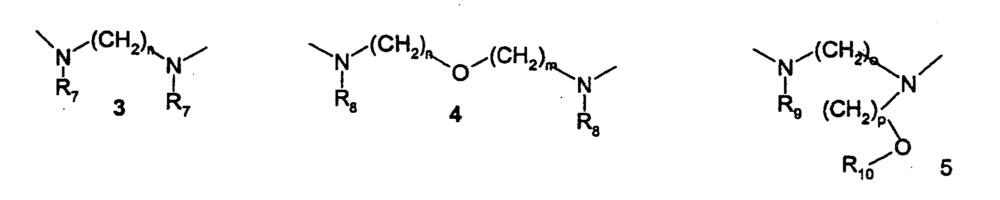 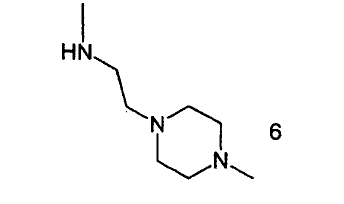
worin
n, m, o, p für 1-8 stehen
q steht für null und eins
R₇, R₈, R₉ stehen unabhängig voneinander für C₁-C₄ Alkyl
R₁₀ steht für Wasserstoff oder SO₃M.

2. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 90:10 Gew.-% bis 10:90 Gew.-%.

3. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 70:30 Gew.-% bis 30:70 Gew.-%.

4. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 65:35 Gew.-% bis 45:55 Gew.-%.

5. Verfahren zur Herstellung der erfindungsgemäßen Farbstoffmischungen durch mechanisches Mischen der einzelnen Komponenten in fester oder in flüssiger Form in den erforderlichen Anteilen;

6. Verfahren zur Herstellung der erfindungsgemäßen Farbstoffmischungen, wobei ein 2,4,6-Trihalogentriazin, insbesondere 2,4,6-Trichlor- oder 2,4,6-Trifluortriazin, zunächst in an und für sich bekannter Verfahrensweise mit 1 - Amino-8-naphthol-3,6-disulfonsäure, dann mit einem Diazoniumsalz, das aus einem Amin der allgemeinen Formel (3A) oder (3B) 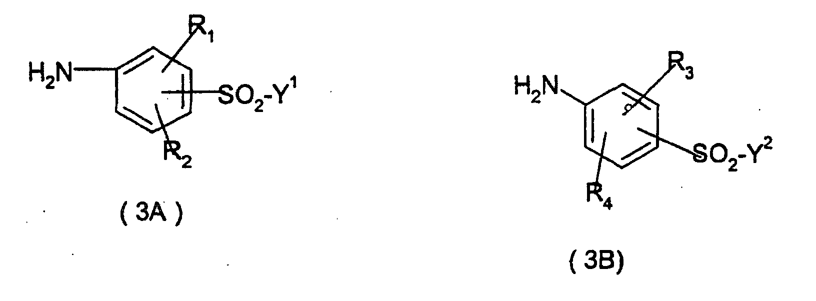 mit R₁, R₂. R₃, R₄ und Y₁ und Y₂ der obengenannten Bedeutung in wohlbekannter Weise hergestellt wurde, umsetzt, anschließend das Reaktionsprodukt aus der Umsetzung mit einem diazotierten Amin der Formel (3A) durch Reaktion mit einer oder mehreren Aminoverbindungen der allgemeinen Formel A-NH-B mit A und B in der obengenannten Bedeutung, reagieren läßt oder zur Herstellung der Komponente der allgemeinen Formel (2) in bekannter Weise bei dem Reaktionsprodukt aus der Umsetzung mit einer diazotierten Aminoverbindung der Formel (3B) das Fragment D-T einführt, dieses Reaktionsprodukt anschließend mit einem Amin der allgemeinen Formel (3C) 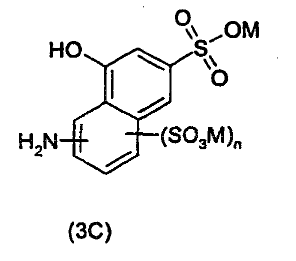 in an und für sich bekannter Verfahrensweise, umsetzt und in bekannter Weise mit dem Diazoniumsalz der Amine der allgemeinen Formel (3D) zum Bisazofarbstoff kuppelt.

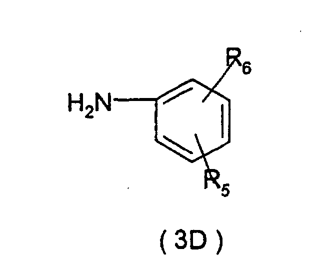

7. Verwendung einer Farbstoffmischung nach mindestens einem der Ansprüche 1 bis 4 zum Färben oder Bedrucken von hydroxy- und/oder carbonamidgruppenhaltigem Material, vorzugsweise Fasermaterial.

8. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, **dadurch gekennzeichnet, dass** man als Farbstoffe eine Farbstoffmischung von mindestens einem der Ansprüche 1 bis 4 einsetzt.

## Claims

1. A dye mixture including one or more azo dyes of the general formula (1) and one or more azo dyes of the general formula (2) 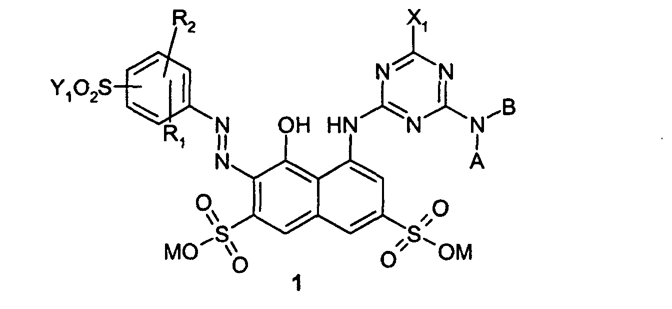 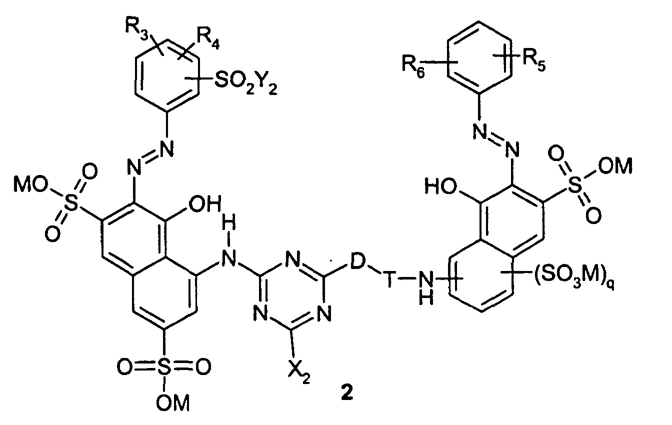 where
M is a hydrogen atom, an ammonium ion or the equivalent of an alkali or alkaline earth metal,
X₁ is fluoro, chloro, alkoxy, hydroxyl, cyanamido, amino, anilino, anilinesulfonic acid, anilinedisulfonic acid, toluidine, anisole, or an unsubstituted or hydroxyl-, sulfo- or sulfato-substituted alkylamino,
X₂ has any of the meanings of X₁
Y₁ and Y₂ are each ethenyl or a moiety of the formula CH₂CH₂Z, where
Z is a moiety that is eliminable by the action of alkali,
R₁,R₂, R₃, R₄, R₅ and R₆ are independently hydrogen, alkyl, alkoxy, sulfo, hydroxyl, cyano, chloro or bromo,
A is hydrogen or C₁-C₆-alkyl, with or without sulfo, hydroxyl or sulfato substitution or aniline with or without sulfo or halogen substitution,
B is hydrogen, alkyl, CH₂CH₂SO₂Y, alkyl with or without SO₂Y, -OCH₂CH₂SO₂Y or -SO₃M substitution or phenyl with or without substitution by up to three substituents selected for example from the group consisting of alkyl, alkoxy, sulfo, hydroxyl, cyano, chloro, bromo and SO₂Y, where M and Y are each as defined above,
A-N-B alternatively represents cyclic amines, for example morpholine or piperazine,
D-T is a direct bond or else
T is a sym-triazine substituted in position 2 by X₃, where X₃ has any of the meanings of X₁, and
D is an alkylenediamino bridge of the general formulae 3, 4, 5 and 6: 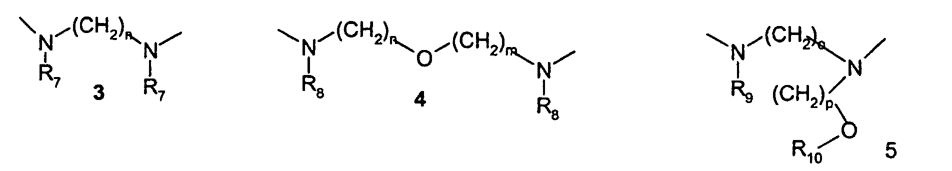 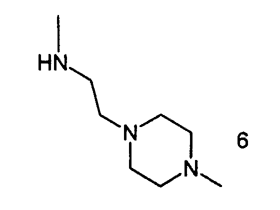
where
n, m, o and p are each 1-8,
q is selected from the group consisting of zero and one,
R₇, R₈, and R₉ are independently C₁-C₄alkyl, and
R₁₀ is hydrogen or SO₃M.

2. A dye mixture as claimed in claim 1, including one or more azo dyes conforming to the general formula (1) and one or more azo dyes conforming to the general formula (2) in a mixing ratio of 90:10% by weight to 10:90% by weight.

3. A dye mixture as claimed in claim 1, including one or more azo dyes conforming to the general formula (1) and one or more azo dyes conforming to the general formula (2) in a mixing ratio of 70:30% by weight to 30:70% by weight.

4. A dye mixture as claimed in claim 1, including one or more azo dyes conforming to the general formula (1) and one or more azo dyes conforming to the general formula (2) in a mixing ratio of 65:35% by weight to 45:55% by weight.

5. The process for preparing the inventive dye mixture by mechanically mixing the individual components in solid or liquid form in the requisite proportions.

6. A process for preparing the inventive dye mixture, which comprises reacting a 2,4,6-trihalotriazine, especially 2,4,6-trichloro- or 2,4,6-trifluoro-triazine, first in a conventional manner with 1-amino-8-naphthol-3,6-disulfonic acid and then with a diazonium salt prepared in a well-known manner from an amine of the general formula (3A) or (3B) 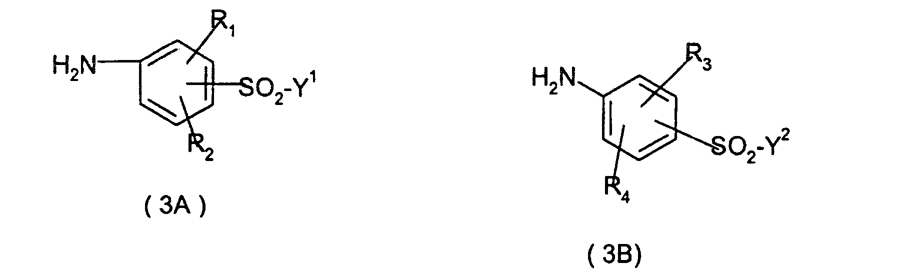 where R₁, R₂, R₃, R₄, Y₁ and Y₂ are each as defined above, then reacting the reaction product from the reaction with a diazotized amine of the formula (3A) by reaction with one or more amino compounds of the general formula A-NH-B, where A and B are each as defined above, or to prepare the component of the general formula (2) introducing the fragment D-T in a known manner in the reaction product from the reaction with a diazotized amino compound of the formula (3B), then reacting this reaction product with an amine of the general formula (3C) 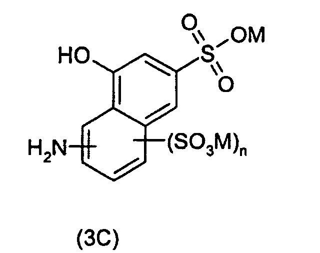 in a conventional manner and coupling with the diazonium salt of the amines of the general formula (3D) in a known manner to form the bisazo dye.

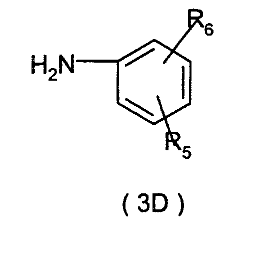

7. The use of a dye mixture as claimed in at least one of claims 1 to 4 for dyeing or printing hydroxyl- and/or carboxamido-containing material, preferably fiber material.

8. A process for dyeing or printing hydroxyl- and/or carboxamido-containing material, preferably fiber material, by applying one or more dyes to the material in dissolved form and fixing the dye or dyes on the material by means of heat or with the aid of an alkaline agent or by means of both measures, which comprises using a dye mixture of at least one of claims 1 to 4 as dyes.

## Revendications

1. Mélanges de colorants contenant un ou plusieurs colorants azoïques de formule générale (1) et un ou plusieurs colorants azoïques de formule générale (2) 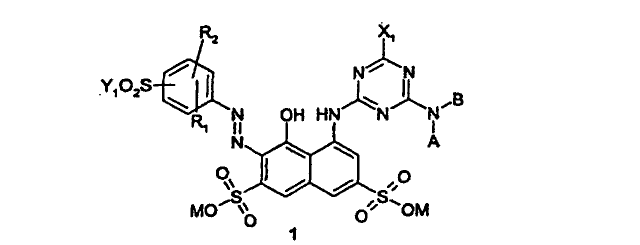 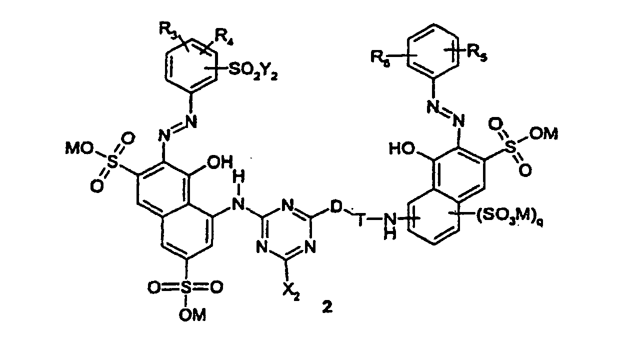 dans lesquelles
M représente un atome d'hydrogène, un ion ammonium ou l'équivalent d'un métal alcalin ou alcalino-terreux,
X₁ peut être un groupe fluoro, chloro, alcoxy, hydroxy, cyanamido, amino, anilino, anilinesulfo, anilinedisulfo, toluidine, anisole ou un groupe acylamino éventuellement substitué par un groupe hydroxy, sulfo ou sulfato,
X₂ a l'une des significations de X₁,
Y₁ et Y₂ représentent le groupe éthényle ou un groupement de formule CH₂CH₂Z, dans laquelle
Z représente un groupement qui peut être éliminé sous l'action d'un alcali,
R₁, R₂, R₃, R₄, R₅ et R₆ représentent, indépendamment les uns des autres, un atome d'hydrogène, de chlore ou de brome ou un groupe alkyle, alcoxy, sulfo, hydroxy, cyano,
A représente un atome d'hydrogène ou un groupe alkyle en C₁-C₆ qui peut être substitué par des groupes sulfo, hydroxy ou sulfato, ou une aniline qui peut être substituée par un atome d'halogène ou par le groupe sulfo,
B représente un atome d'hydrogène, un groupe alkyle, CH₂CH₂SO₂Y ou un groupe alkyle éventuellement substitué par SO₂Y, -OCH₂CH₂SO₂Y ou -SO₃M, ou un radical phényle qui peut être substitué jusqu'à trois fois, par exemple, par des groupes alkyle, alcoxy, sulfo, hydroxy, cyano, chloro, bromo ou SO₂Y, M et Y ayant les significations données plus haut,
A-N-B peut également représenter des amines cycliques, par exemple la morpholine ou la pipérazine,
D-T représentent une liaison directe ou bien
T représente une sym-triazine qui est substituée en position 2 par X₃, X₃ ayant une signification de X₁, et
D représente un pont alkylènediamino de formules générales 3, 4, 5 et 6 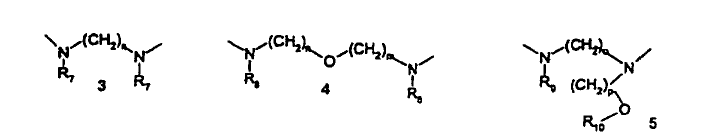 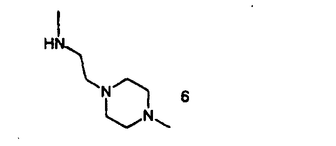
dans lesquelles
n, m, o, p représentent 1-8,
q représente zéro ou un,
R₇, R₈, R₉ représentent, indépendamment les uns des autres, un groupe alkyle en C₁-C₄,
R₁₀ représente un atome d'hydrogène ou SO₃M.

2. Mélange de colorants selon la revendication 1, contenant un ou plusieurs colorants azoïques selon la formule générale (1) et un ou plusieurs colorants azoïques selon la formule générale (2) en un rapport de mélange allant de 90:10 % en poids à 10:90 % en poids.

3. Mélange de colorants selon la revendication 1, contenant un ou plusieurs colorants azoïques selon la formule générale (1) et un ou plusieurs colorants azoïques selon la formule générale (2) en un rapport de mélange allant de 70:30 % en poids à 30:70 % en poids.

4. Mélange de colorants selon la revendication 1, contenant un ou plusieurs colorants azoïques selon la formule générale (1) et un ou plusieurs colorants azoïques selon la formule générale (2) en un rapport de mélange allant de 65:35 % en poids à 45:55 % en poids.

5. Procédé pour la préparation des mélanges de colorants selon l'invention, par mélange mécanique des composants individuels sous forme solide ou sous forme liquide, en les proportions requises.

6. Procédé pour la préparation des mélanges de colorants selon l'invention, dans lesquels on fait réagir une 2,4,6-trihalogénotriazine, en particulier la 2,4,6-trichloro- ou 2,4,6-trifluorotriazine, d'abord, dans un mode opératoire connu en soi, avec de l'acide 1-amino-8-naphtol-3,6-disulfonique, puis avec un sel de diazonium qui a été préparé, d'une façon bien connue, à partir d'une amine de formule générale (3A) ou (3B) 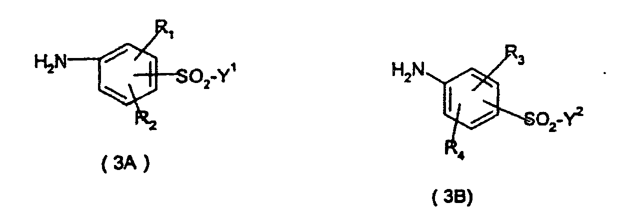 où R₁, R₂, R₃, R₄ et Y₁ et Y₂ ont les significations données plus haut, on fait ensuite réagir le produit de réaction, provenant de la réaction, avec une amine diazotée de formule (3A), par réaction avec un ou plusieurs composés amino de formule générale A-NH-B, où A et B ont les significations données plus haut, ou, pour la préparation du composant de formule générale (2), en introduisant de façon connue en soi le fragment D-T dans le produit de réaction, provenant de la réaction, avec un composé amino diazoté de formule (3B), puis en faisant réagir dans un mode opératoire connu en soi ce produit de réaction avec une amine de formule générale (3C) 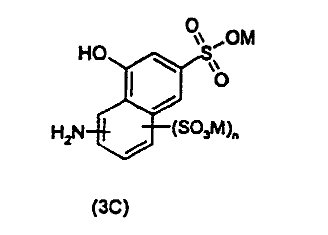 et en le faisant copuler de façon connue avec le sel de diazonium des amines de formule générale (3D)
pour aboutir au colorant bisazoïque.

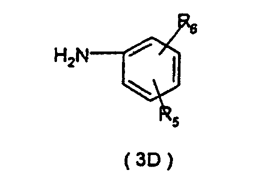

7. Utilisation d'un mélange de colorants selon au moins l'une quelconque des revendications 1 à 4, pour la teinture ou l'impression d'un matériau, de préférence un matériau fibreux, contenant des groupes hydroxy et/ou carbamoyle.

8. Procédé pour la teinture ou l'impression d'un matériau, de préférence un matériau fibreux, contenant des groupes hydroxy et/ou carbamoyle, dans lequel on applique sur le matériau un ou plusieurs colorants sous forme dissoute et on fixe le ou les colorants sur le matériau au moyen de chaleur ou à l'aide d'un agent à action alcaline ou par ces deux moyens, **caractérisé en ce qu'**on utilise en tant que colorants un mélange de colorants d'au moins l'une quelconque des revendications 1 à 4.
